# EUROPEAN PATENT SPECIFICATION

(11) **EP 3 079 506 B1**
(45) Date of publication and mention of the grant of the patent: **24.10.2018**
(21) Application number: 14766675.4
(22) Date of filing: 09.09.2014
(51) Int. Cl.: A23L 33/16, A23L 33/00

(54) **AN AGE-TAILORED NUTRITION SYSTEM FOR AN INFANT**
ALTERSANGEPASSTE ERNÄHRUNGSSYSTEM FÜR SÄUGLINGE
SYSTEME DE NUTRITION ADAPTE A L'AGE POUR NOURRISSONS

(30) Priority: 12.12.2013 WO PCT/CN2013/089263
(43) Date of publication of application: 19.10.2016
(73) Proprietor: Nestec S.A., 1800 Vevey (CH)
(72) Inventor: DE CASTRO, Carlos Antonio, CH-1203 Geneva (CH); LIAO, Yongcheng, Beijing (CN); NING, Celia, Beijing 101318 (CN); WANG, Junkuan, Beijing (CN); XIA, Ying, Beijing (CN)
(74) Representative: Corticchiato, Olivier
(86) International application number: PCT/EP2014/069129
(87) International publication number: WO 2015/086177

(56) References cited:
- EP-A1- 2 452 574
- EP-A1- 2 465 507
- WO-A1-2014/163975
- WO-A2-2008/111942
- US-A- 5 340 603
- US-A1- 2013 189 398
- DATABASE WPI Week 200903 Thomson Scientific, London, GB; AN 2009-A47198 XP002732987, & CN 101 317 598 A (INNER MONGOLIA MENGNIU DAIRY IND GROUP C) 10 December 2008 (2008-12-10)
- DATABASE WPI Week 201260 Thomson Scientific, London, GB; AN 2012-J79116 XP002732988, & CN 102 511 557 A (INNER MONGOLIA YILI IND GROUP CO LTD) 27 June 2012 (2012-06-27)
- * B L Salle ET AL: "Calcium, Phosphorus, and Vitamin D in Human Milk", Biology of Human Milk, vol. 15, 1 January 1988 (1988-01-01), XP55488777,
- Lori S Brizee: "Summary of Formulas used for nutritional support of infants", , 1 June 2004 (2004-06-01), XP55488781, Retrieved from the Internet: URL:http://courses.washington.edu/nutr526/ news/Infant_Formulas_05.doc [retrieved on 2018-06-28]

## Description

### Field of the invention

This invention relates to an age tailored nutrition system for infants comprising at least two infant formulae.

### Background of the invention

Research into the components of human milk has been going on for many years and is by no means complete even now. However, it has been known for some time that the composition of human milk changes appreciably with duration of lactation.

Mother's milk is recommended for all infants. However, in some cases breast feeding is inadequate or unsuccessful for medical reasons or the mother chooses not to breast feed. Infant formulae have been developed for these situations. Conventional infant formulae fall into two categories, first stage formulae for infants from the age of birth to six months and which provide complete nutrition for this age group and second stage formulae for infants between the ages of six months and twelve months which are fed to the infants in combination with increasing amounts of other foods such as infant cereals and puréed fruits, vegetables and other foodstuffs as the process of weaning progresses.

Among the nutritional components, calcium is one of the most concerned elements for a mother who can not breast feed infants or chooses not to breast feed, as it is known that calcium has favorable effect on bone development of infants, even on the bone developments at later life stages. Typically, the calcium content in commercially available infant formulae is between 300 and 700 mg/100 g for the first stage of 0 to 6 months; and between 500 and 900 mg/100 g for the second stage of 6 to 12 months.

For the benefit of infants that will not be completely breast-fed in the first few months of life, there is a continuing need to develop infant formulae which will replicate human milk as far as possible in terms of its nutritional properties. Particularly, there is a need for infant formulae which can sufficiently improve the bone development of infants that will not be completely breast-fed in the first few months of life and the later growing stage.

It is known in the art that the ratio of calcium to phosphorus in infant formulae play more important role in bone development than the content of calcium alone in infant formulae.

In infant formula the calcium to phosphorus ratio is importantly regulated according to standard and can only vary within a well established range. That range also corresponds to the currently accepted scientific knowledge for inducing the best infant development, in particular the development of the bones and future teeth.

The ratio of calcium to phosphorus in the commercially available infant formula products is from 1.0:1 to 2.0:1. Surprisingly it has been found that it is lower than the observed ratio of calcium to phosphorus in human breast milk, especially Chinese mother breast milk, which can be seen from the results of an investigation regarding minerals in breast milk in China. This study will be described in detail below.

In addition, both the conventional first and second stage infant formulae, especially the first stage infant formula, have constant ratio of calcium to phosphorus during a period from 0 to 6 months. It was surprisingly found by the inventors that the ratio of calcium to phosphorus in human breast milk will undergo appreciable changes during the first six months of infant life. That is to say, the commercially available first stage infant formulae for all of the first six months of infant life can not provide desirable ratio of calcium to phosphorus like breast milk for bone development.

It is therefore an object of the invention to provide infant formulae with optimal ratio of calcium to phosphorus for bone development and other calcium induced development such as future teeth.

It is also an object of the invention to provide infant formulae which mimic human breast milk as far as possible in terms of nutritional properties, especially in terms of the ratio of calcium to phosphorus.

US5340603 (Michael J Neylan et al), CN201111450144 (XP-002732988), CN1011317598 (XP-002732987) Salle et al (Biology of Human Milk, 1988), Summary of Formula used for Nutritional support of Infants (Brizee, 2004) are all publications relating to compositions and products, especially for infants, and human milk compositions.

### Summary of the invention

In order to mimic human breast milk, the inventors carried out an investigation in China to characterize the nutrients composition of Chinese mother milk. The results of mineral nutrients in the statistical report of breast milk of Chinese lactating mothers are briefly provided below.

### Study design

This is an observational, cross sectional, multi-center study aiming at evaluating nutrients composition of breast milk and nutrition intake of Chinese lactating mothers in 3 cities in China.

### Study population

### • Number of subjects

Total 540 healthy subjects were enrolled, allowing a drop-out rate of 10 percent.

They were comprised of:
- 480 Lactating mothers in 3 cities (Beijing, Suzhou and Guangzhou)
- 30 mothers per city for each of the 5 time points (5-11 days, 1 month, 2 months, 4 months and 8 months)

### Inclusion/Exclusion criteria

- Inclusion: Healthy Chinese lactating mothers without history of acute and chronic diseases; exclusively breast feeding mothers during 4 months after delivery were enrolled.
- Exclusion: Chinese lactating mothers having history of psychopath tendencies and having no dietary memory.

### Results

Summary statistics of Mineral contents in breast milk

| months | N | Min | Mean | SD | Max |
|---|---|---|---|---|---|
| Calcium (mg/kg) | | | | | |
| 0 | 90 | 192.00 | 303.32 | 52.45 | 419.00 |
| 1 | 90 | 151.00 | 293.16 | 46.27 | 397.00 |
| 2 | 90 | 206.00 | 309.27 | 42.99 | 432.00 |
| 4 | 90 | 198.00 | 287.44 | 39.99 | 406.00 |
| 8 | 90 | 150.00 | 267.59 | 43.43 | 462.00 |

| Copper (mg/kg) | | | | | |
|---|---|---|---|---|---|
| 0 | 90 | 0.16 | 0.56 | 0.15 | 0.93 |
| 1 | 89 | 0.26 | 0.49 | 0.14 | 1.10 |
| 2 | 90 | 0.15 | 0.35 | 0.09 | 0.59 |
| 4 | 90 | 0.13 | 0.31 | 0.07 | 0.47 |
| 8 | 86 | 0.11 | 0.28 | 0.09 | 0.64 |

| Iodine (µg/kg) | | | | | |
|---|---|---|---|---|---|
| 0 | 89 | 53.00 | 293.63 | 157.29 | 946.00 |
| 1 | 89 | 62.00 | 223.35 | 121.47 | 618.00 |
| 2 | 85 | 51.00 | 188.09 | 91.33 | 680.00 |
| 4 | 88 | 51.00 | 175.28 | 75.99 | 484.00 |
| 8 | 90 | 59.00 | 185.96 | 96.35 | 594.00 |

| Phosphorus (mg/kg) | | | | | |
|---|---|---|---|---|---|
| 0 | 90 | 66.00 | 143.79 | 33.64 | 214.00 |
| 1 | 90 | 73.00 | 147.88 | 24.64 | 228.00 |
| 2 | 90 | 93.00 | 136.08 | 19.48 | 182.00 |
| 4 | 90 | 88.00 | 118.02 | 18.39 | 192.00 |
| 8 | 90 | 35.00 | 113.58 | 19.45 | 198.00 |

| Potassium (mg/kg) | | | | | |
|---|---|---|---|---|---|
| 0 | 90 | 438.00 | 665.89 | 111.00 | 1001.00 |
| 1 | 90 | 423.00 | 600.34 | 79.03 | 832.00 |
| 2 | 90 | 375.00 | 537.10 | 63.30 | 715.00 |
| 4 | 90 | 352.00 | 489.12 | 61.36 | 649.00 |
| 8 | 90 | 356.00 | 459.26 | 47.94 | 614.00 |

| Sodium (mg/kg) | | | | | |
|---|---|---|---|---|---|
| 0 | 89 | 87.0 | 360.3 | 225.7 | 1220.0 |
| 1 | 89 | 97.0 | 230.8 | 190.9 | 1280.0 |
| 2 | 90 | 60.0 | 140.3 | 67.5 | 510.0 |
| 4 | 90 | 41.0 | 130.3 | 68.8 | 45.00 |
| 8 | 90 | 39.0 | 120.1 | 92.4 | 810.0 |

| Zinc (mg/kg) | | | | | |
|---|---|---|---|---|---|
| 0 | 90 | 0.89 | 3.87 | 1.52 | 9.90 |
| 1 | 90 | 0.91 | 2.85 | 1.16 | 7.30 |
| 2 | 90 | 0.66 | 1.98 | 0.68 | 4.10 |
| 4 | 89 | 0.52 | 1.47 | 0.61 | 3.50 |
| 8 | 86 | 0.57 | 1.25 | 0.50 | 2.90 |

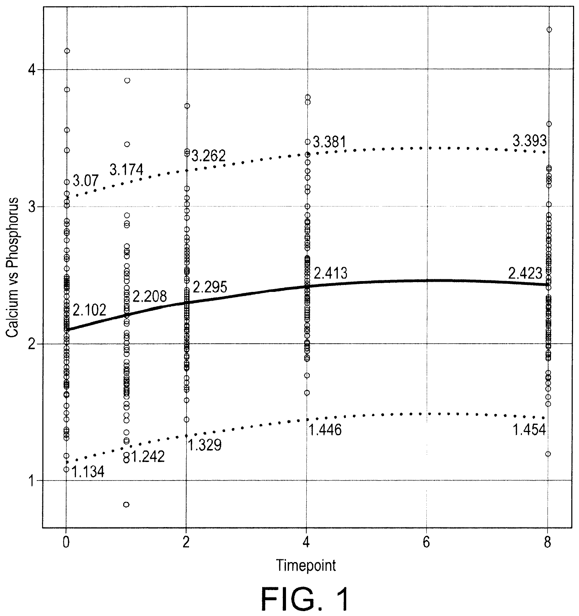

According to above results, the inventors performed statistical analysis and surprisingly found the ratio of calcium and phosphorus gradually increases during this period, especially from 0 to 6 months, more especially from 0 to 2 months. It was surprisingly found by the inventors that the ratio of calcium to phosphorus in human breast milk is from more than 2.0:1 to 2.5:1 which is more than the known ratio of calcium to phosphorus in commercial available infant formulae, and this ratio gradually increases during the first six months of infant life, especially from 0 to 2 months, as can be seen from the curve of Ca/P ratio in Figure 1. Based on these unexpected findings, the present invention provides a modified infant formula or an age-tailored nutrition system to improve bone development of an infant and later life stage.

The invention is defined by the claims. Herewith described are the following aspects :
15). An age-tailored nutrition system for an infant, comprising:
   a first infant formula being designed to meet the nutritional requirement of an infant from birth to two months and having a phosphorus source and a calcium source such that the calcium : phosphorus ratio is between 1.0:1 and 2.5:1, and
   a second infant formula being designed to meet the nutritional requirement of an infant from above two to six months and having a phosphorus source and a calcium source such that the calcium : phosphorus ratio is between 1.0:1 and 2.5:1, and
   optionally, a third infant formula being designed to meet the nutritional requirement of an infant from above six to twelve months and having a phosphorus source and a calcium source such that the calcium : phosphorus ratio is between 1.0:1 and 2.5:1,
   wherein the calcium : phosphorus ratio in the second infant formula is higher than that in the first infant formula, and the calcium : phosphorus ratio in the optional third infant formula is higher than that in the second infant formula, and wherein at least one of the first, second and optional third infant formulae has a calcium : phosphorus ratio from more than 2.0:1 to 2.5:1.
16) . An age-tailored nutrition system for an infant according to the above aspect 15), comprising:
   a first infant formula being designed to meet the nutritional requirement of an infant from birth to two months and having a phosphorus source and a calcium source such that the calcium : phosphorus ratio is from more than 2.0:1 to 2.5:1, and
   a second infant formula being designed to meet the nutritional requirement of an infant from above two to six months and having a phosphorus source and a calcium source such that the calcium : phosphorus ratio is from more than 2.0:1 to 2.5:1, and
   optionally, a third infant formula being designed to meet the nutritional requirement of an infant from above six to twelve months and having a phosphorus source and a calcium source such that the calcium : phosphorus ratio is from more than 2.0:1 to 2.5:1.
17). An age-tailored nutrition system according to the above aspect 15) or 16), wherein the first infant formula has a calcium : phosphorus ratio of from more than 2.0:1 to 2.3:1.
18) . An age-tailored nutrition system according to any of the above aspects 15) to 17), wherein the second infant formula has a calcium : phosphorus ratio of between 2.2:1 and 2.5:1.
19) . An age-tailored nutrition system according to any of the above aspects 15) to 18), wherein the third infant formula has a calcium : phosphorus ratio of between 2.4:1 and 2.5:1.
20) . An age-tailored nutrition system according to any of the above aspects 15) to 19), wherein the first infant formula has a phosphorus content between 70 and 42 mg/100kcal and has a calcium content between 140 and 98 mg/100kcal.
21) . An age-tailored nutrition system according to any of the above aspects 15) to 20), wherein the second infant formula has a phosphorus content between 42 and 38 mg/100kcal and has a calcium content between 98 and 95 mg/100kcal.
22) . An age-tailored nutrition system according to any of the above aspects 15) to 21), wherein the third infant formula has a phosphorus content lower than 38 mg/100kcal and has a calcium content lower than 95 mg/100kcal.
23) . An age-tailored nutrition system according to any of the above aspects 15) to 22), wherein each of the first, the second and the optional third infant formulae comprises at least one additional component selected from lipids, minerals other than calcium and phosphorus, vitamins, lactoferrin, probiotics, prebiotics, proteins, carbohydrates, or any mixtures thereof.
24) . An age-tailored nutrition system according to the above aspect 23), wherein the lipid is long-chain polyunsaturated fatty acids, preferably selected from docosahexaenoic acid (DHA), arachidonic acid (ARA), eicosapentaenoic acid (EPA) and dihomo-gamma-linolenic acid (DGLA), medium-chain triglycerides, milk fat globule membranes (MFGM), or any mixtures thereof.
25) . An age-tailored nutrition system according to any of the above aspects 15) to 24), wherein each of the first, second and optional third infant formulae comprises minerals other than calcium and phosphorus, selected from copper, magnesium, potassium, iron, selenium, sodium, zinc, manganese, chloride and iodine.
26). An age-tailored nutrition system according to the above aspect 25), wherein the content of at least one mineral selected from calcium, iodine, phosphorus, potassium, sodium, copper and zinc in the second infant formula is lower than that in the first infant formula, and the content of said at least one mineral in the optional third infant formula is lower than that in the second infant formula.
27). An age-tailored nutrition system according to the above aspect 26), wherein the contents of at least two, at least three, at least four or at least five of said minerals in the second infant formula are lower than in the first infant formula, and the contents of said at least two, at least three, at least four or at least five of said minerals in the optional third infant formula are lower than in the second infant formula.
28). An age-tailored nutrition system according to the above aspect 26), wherein the contents of iodine, phosphorus, potassium, sodium, copper and zinc in the second infant formula are lower than in the first infant formula, and the contents of said minerals in the optional third infant formula are lower than in the second infant formula.
29). An age-tailored nutrition system according to the above aspect 26), wherein the contents of calcium, iodine, phosphorus, potassium, sodium, copper and zinc in the second infant formula are lower than in the first infant formula, and the contents of said minerals in the optional third infant formula are lower than in the second infant formula.
30). An age-tailored nutrition system according to any of the above aspects 15) to 29), wherein each of the first, second and the optional third infant formulae comprises probiotics selected from *Bifidobacterium, Lactobacillus,* or any mixtures thereof.
31). An age-tailored nutrition system according to any of the above aspects 15) to 30), wherein each of the first, second and the optional third infant formulae comprises a protein source comprising whey, casein or mixture thereof.
32) . An age-tailored nutrition system according to the above aspect 31), wherein each of the first, second and the optional third infant formulae comprises whey and optional casein, and wherein the ratio of whey and casein in the first infant formula is between 100:0 and 60:40 and the protein content is between 2.0 and 3.0 g /100 kcal, and the ratio of whey and casein in the second infant formula is between 70:30 and 50:50 and the protein content is between 1.7 and 2.1 g /100 kcal, with the proviso that either the protein content or the whey:casein ratio of the second formula or both is/are lower than for the first formula.
33) . An age-tailored nutrition system according to any of the above aspects 15) to 32), wherein each of the first, the second and the optional third infant formulae is in the form of a powder to be reconstituted or a concentrate to be diluted.
34) . An age-tailored nutrition system according to any of the above aspects 15) to 33), wherein the first, the second and the optional third infant formulae are packed in single dose units, each unit comprising sufficient nutritional composition to prepare a single serving upon reconstitution with water.
35) . An age-tailored nutrition system according to the above aspect 34), wherein the single dose units are in a form of a capsule or a can.
36) . An age-tailored nutrition system according to any of the above aspects 15) to 35) for use in improving bone development of infants from birth.
37) . A method of providing nutrition to an infant in the first six months of life, comprising
   feeding to the infant for at least part of the first two months of life a first infant formula, and
   feeding to the infant for at least part of the following four months of life a second infant formula,
   wherein the first infant formula and the second infant formula are as defined in any of the above aspects 15) to 36).
38) . A method of providing nutrition to an infant in the first twelve months of life, comprising
   feeding to the infant for at least part of the first two months of life a first infant formula,
   feeding to the infant for at least part of the following four months of life a second infant formula, and
   feeding to the infant for at least part of the remainder of the first twelve months of life a third infant formula,
   wherein the first infant formula, the second infant formula and the third infant formula are as defined in any of the above aspects 15) to 36).
39). Use of the infant formula according to any of the above aspects 1) to 14) or the age-tailored nutrition system according to any of the above aspects 15) to 37) for preparation of a kit for improving bone development of an infant from birth.

### Brief description of Figure

Figure 1 shows curves depicting the change of the ratio of calcium to phosphorus in human breast milk during the first eight months of lactation, which are fitted linear models with background raw observations . Broken lines represent the upper and lower bounds for 95 percent confidence intervals while the solid line represents the model estimates.

### Detailed description of the invention

In the present specification, the following words are given a definition that must be taken into account when reading and interpreting the description, examples and claims.

Infant: the term "infant" means children under the age of 12 months. This definition is adopted in the present specification.

Infant formula: The term "infant formula" means foodstuffs intended for particular nutritional use by infants and satisfying by themselves the nutritional requirements of this category of persons. It has to be understood that infants can be fed solely with infant formula, or that the infant formula can be used by the career as a complement of human milk.

Probiotic: according to the paper Probiotics in Man and Animals, J. Appl Bacteriol. 66: 365-378, a probiotic is defined as a live microbial feed supplement which beneficially affects the host animal by improving its intestinal microbial balance.

Herewith described is an infant formula being designed to meet the nutritional requirement of an infant, which comprises a phosphorus source and a calcium source such that the calcium : phosphorus ratio is from more than 2.0:1 to 2.5:1, preferably between 2.1:1 and 2.5:1.

The said infant formula is designed to meet the nutritional requirement of an infant from birth to two months and wherein the calcium : phosphorus ratio is from more than 2.0:1 to 2.3:1.

The said infant formula is designed to meet the nutritional requirement of an infant from above two to six months and wherein the calcium : phosphorus ratio is between 2.2:1 and 2.5:1.

The said infant formula is designed to meet the nutritional requirement of an infant from above six to twelve months and wherein the calcium : phosphorus ratio is between 2.4:1 and 2.5:1.

As calcium source to be used in the infant formula any conventional substances may be used. For example, milk such as cow milk, goat milk may be used, which can provide calcium together with other nutritional substances such as proteins. Organic and/or inorganic calcium salts such as calcium carbonate, calcium lactate, calcium gluconate may also be added as calcium source.

The phosphorus source to be used in the infant formula is also known in the art. Similarly, the phosphorus may be derived from the milk for preparing the infant formula or may be added deliberately in form of organic and/or inorganic phosphate such as sodium dihydrogen phosphate.

The content of calcium and/or phosphorus in the said infant formula may be chosen in the conventional amounts known in the art with the proviso that the ratio of calcium and phosphorus falls within the ranges as defined hereinabove. Preferably, the phosphorus content in the said infant formula is between 70 and 25 mg/100kcal. The preferred calcium content in the said infant formula is between 140 and 50 mg/100kcal.

The said infant formula may comprise any other conventional component sources to meet the nutritional requirement of an infant, such as sources of lipids, minerals other than calcium and phosphorus, vitamins, lactoferrin, probiotics, prebiotics, proteins, carbohydrates, or any mixtures thereof.

The said infant formula may comprise a lipid source. The lipid source may be any lipid or fat which is suitable for use in infant formulae. Preferred fat sources include milk fat, palm olein, high oleic sunflower oil and high oleic safflower oil. Preferably, the said infant formula according to the present invention may comprise a source of long-chain polyunsaturated fatty acids, preferably selected from docosahexaenoic acid (DHA), arachidonic acid (ARA), eicosapentaenoic acid (EPA) and/or dihomo-gamma-linolenic acid (DGLA), or may comprise a source of medium-chain triglycerides, milk fat globule membranes (MFGM), or any mixtures thereof. The lipid source preferably has a ratio of n-6 to n-3 fatty acids of about 5:1 to about 15:1; for example about 8:1 to about 10:1.

The said infant formula may also contain all vitamins and minerals understood to be essential in the daily diet and in nutritionally significant amounts in addition to calcium and phosphorus. Examples of minerals, vitamins and other nutrients optionally present in the infant formula include vitamin A, vitamin B₁, vitamin B₂, vitamin B₆, vitamin B₁₂, vitamin E, vitamin K, vitamin C, vitamin D, folic acid, inositol, niacin, biotin, pantothenic acid, taurine, L-carnitine, choline, calcium, phosphorous, iodine, iron, magnesium, copper, zinc, manganese, chloride, potassium, sodium and selenium. Minerals are usually added in salt form. The presence and amounts of specific minerals and other vitamins will vary depending on the intended infant population.

The said infant formula may also be supplemented with lactoferrin. Lactoferrin is known *inter alia* to promote the growth and maturation of the gastrointestinal tract in newborn infants.

The said infant formula may also comprise at least one probiotic bacterial strain. Examples of suitable probiotic micro-organisms used include yeasts such as *Saccharomyces, Debaromyces, Candida, Pichia* and *Torulopsis,* moulds such as *Aspergillus, Rhizopus, Mucor,* and *Penicillium* and *Torulopsis* and bacteria such as the genera *Bifidobacterium, Bacteroides, Clostridium, Fusobacterium, Melissococcus, Propionibacterium, Streptococcus, Enterococcus, Lactococcus, Staphylococcus, Peptostrepococcus, Bacillus, Pediococcus, Micrococcus, Leuconostoc, Weissella, Aerococcus, Oenococcus* and *Lactobacillus.* Specific examples of suitable probiotic micro-organisms are: *Saccharomyces cereviseae, Bacillus coagulans, Bacillus licheniformis, Bacillus subtilis, Bifidobacterium bifidum, Bifidobacterium breve* such as *B. breve* CNCM 1-3865, *Bifidobacterium infantis, Bifidobacterium lactis* such as *B. lactis* CNCM 1-3446, *Bifidobacterium longum* such as *B. longum* CNCM 1-2618, *B. longum* BB536 ATCC BAA-999, *B. longum* BL999, *Enterococcus faecium, Enterococcus faecalis, Lactobacillus acidophilus* such as *L. acidophilus* L92 FERM BP.4981, *Lactobacillus alimentarius, Lactobacillus casei subsp. casei, Lactobacillus casei Shirota, Lactobacillus curvatus, Lactobacillus delbruckii subsp. lactis, Lactobacillus farciminus, Lactobacillus fermentum* such as *L. fermentum* VRI-033 PCC strain NM 02/31074, *Lactobacillus gasseri, Lactobacillus helveticus* such as *L. helveticus* CNCM 1-4095, *Lactobacillus johnsonii* such as *L. johnsonii* La1 CNCM 1-1225, *Lactobacillus paracasei* such as *L. paracasei* ST11 CNCM 1-2116, *L. paracasei* 33, *Lactobacillus rhamnosus* (*Lactobacillus GG*) such as *L. rhamnosus* CGMCC 1.3724 ATCC 53103, *Lactobacillus sake, Lactococcus lactis* such as *L. lactis* SL31 CNCM 1-4154, *Micrococcus varians, Pediococcus acidilactici, Pediococcus pentosaceus, Pediococcus acidilactici, Pediococcus halophilus, Streptococcus faecalis, Streptococcus thermophilus* such as *S. thermophilus* CNCM I-3915, *Streptococcus salivarius* such as *S. salivarius* K12 ATCC BAA-1024, *Staphylococcus carnosus,* and *Staphylococcus xylosus,* or any mixtures thereof.

Preferred probiotic bacterial strains include *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM 1-2116, *Bifidobacterium lactis* CNCM 1-3446 sold *inter alia* by the Christian Hansen company of Denmark under the trade mark Bb 12 and *Bifidobacterium longum* ATCC BAA-999 sold by Morinaga Milk Industry Co. Ltd. of Japan under the trade mark BB536, *Bifidobacterium breve* CNCM 1-3865, *Bifidobacterium longum* CNCM 1-2618, *Lactobacillus acidophilus* L92 FERM BP.4981 from Calpis, *Lactobacillus helveticus* CNCM 1-4095, *Lactobacillus johnsonii* La1 CNCM 1-1225, *Lactococcus lactis* SL31 CNCM 1-4154, *Streptococcus thermophilus* CNCM 1-3915, *Streptococcus salivarius* such as *S. salivarius* K12 ATCC BAA-1024 from BLIS, *Lactobacillus paracasei* 33 from Uni President, *L. fermentum* VRI-033 PCC strain NM 02/31074 from Probiomix.

*Bifidobacterium such as Bifidobacterium lactis* and *Lactobacillus such as Lactobacillus rhamnosus* are preferably used in the said infant formula.

The amount of probiotic, if present, is preferably present in an amount of 10³ to 10¹² cfu/g, more preferably 10⁶ to 10¹¹ cfu/g, even more preferably 10⁴ to 10⁹ cfu/g, most preferably 10⁷ to 10⁹ cfu/g composition (dry weight). It may be hypothetized that the calcium to phosphorus ratio in the infant feeding may influence the growth of some probiotics.

Additionally, the said infant formula may comprise prebiotics. If present, the prebiotics are preferably present in the formulae in an amount 1 to 20wt%, preferably 2 to 15wt% on a dry matter basis.

A prebiotic is a non-digestible food ingredient that beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics include certain oligosaccharides, such as fructooligosaccharides (FOS) and galactooligosaccharides (GOS). A combination of prebiotics may be used such as 90% GOS with 10% short chain fructo-oligosaccharides such as the product sold under the trade mark Raftilose® or 10% inulin such as the product sold under the trade mark Raftiline®.

A particularly preferred prebiotic is a mixture of galacto-oligosaccharide(s), N-acetylated oligosaccharide(s) and sialylated oligosaccharide(s) in which the N- acetylated oligosaccharide(s) comprise 0.5 to 4.0% of the oligosaccharide mixture, the galacto-oligosaccharide(s) comprise 92.0 to 98.5% of the oligosaccharide mixture and the sialylated oligosaccharide(s) comprise 1.0 to 4.0% of the oligosaccharide mixture. This mixture is hereinafter referred to as "CMOS-GOS".

Preferably, the said infant formula contains from 2.5 to 15.0 wt% CMOS-GOS on a dry matter basis with the proviso that the composition comprises at least 0.02 wt% of an N-acetylated oligosaccharide, at least 2.0 wt% of a galacto-oligosaccharide and at least 0.04 wt% of a sialylated oligosaccharide.

Suitable N-acetylated oligosaccharides include GalNAcαl, 3Galβl, 4Glc and Galβl, 6GalNAcαl, 3Galβl, 4Glc. The N-acetylated oligosaccharides may be prepared by the action of glucosaminidase and/or galactosaminidase on N-acetyl-glucose and/or N-acetyl galactose. Bqually, N-acetyl-galactosyl transferases and/or N-acetyl-glycosyl transferases may be used for this purpose. The N-acetylated oligosaccharides may also be produced by fermentation technology using respective enzymes (recombinant or natural) and/or microbial fermentation. In the latter case the microbes may either express their natural enzymes and substrates or may be engineered to produce respective substrates and enzymes. Single microbial cultures or mixed cultures may be used. N-acetylated oligosaccharide formation can be initiated by acceptor substrates starting from any degree of polymerisation (DP) from DP=1 onwards. Another option is the chemical conversion of keto-hexoses (e.g. fructose) either free or bound to an oligosaccharide (e.g. lactulose) into N-acetylhexosamine or an N-acetylhexosamine containing oligosaccharide as described in Wrodnigg, T. M.; Stutz, A.E. (1999) Angew. Chem. Int. Ed. 38:827-828.

Suitable galacto-oligosaccharides include Galβl, 6Gal, Galβl, 6Galβl, 4Glc, Galβl, 6Galβl, 6Glc, Galβl, 3Galβl, 3Glc, Galβl, 3Galβl, 4Glc, Galβ1, 6Galβ1, 6Galβ1, 4Glc, Galβ1, 6Galβ1, 3Galβ1, 4Glc, Galβ1,3Galβ1, 6Galβ1,4Glc, Galβ1, 3Galβl, 3Galβl, 4Glc, Galβl, 4Galβl, 4Glc and Galβl, 4Galβl, 4Galβl, 4Glc.

Synthesised galacto-oligosaccharides such as Galβl, 6Galβl, 4Glc, Galβl, 6Galβl, 6Glc, Galβl, 3Galβl, 4Glc, Galβl, 6Galβl, 6Galβl, 4Glc, Galβl, 6Galβl, 3Galβl, 4Glc and Galβl, 3Galβl, 6Galβl, 4Glc, Galβl, 4Galβl, 4Glc and Galβl, 4Galβl, 4Galβl, 4Glc and mixtures thereof are commercially available under the trademarks Vivinal® and Elix'or®. Other suppliers of oligosaccharides are Dextra Laboratories, Sigma-Aldrich Chemie GmbH and Kyowa Hakko Kogyo Co.,Ltd. Alternatively, specific glycosyltransferases, such as galactosyltransferases may be used to produce neutral oligosaccharides.

Suitable sialylaled oligosaccharides include NeuAcα2, 3Galβl, 4Glc and NeuAcα2, 6Galβl, 4Glc. These sialylated oligosaccharides may be isolated by chromatographic or filtration technology from a natural source such as animal milks. Alternatively, they may also be produced by biotechnology using specific sialyltransferases either by enzyme based fermentation technology (recombinant or natural enzymes) or by microbial fermentation technology. In the latter case microbes may either express their natural enzymes and substrates or may be engineered to produce respective substrates and enzymes . Single microbial cultures or mixed cultures may be used. Sialyl-oligosaccharide formation can be initiated by acceptor substrates starting from any degree of polymerisation (DP) from DP=1 onwards.

The said infant formula may comprise a protein selected from intact or hydrolysed protein, proteins associated with milk fat globule membrane (MFGM), casein, whey, soy protein, or any mixtures thereof. In a preferable embodiment, the said infant formula comprises whey and optional casein and has a whey: casein ratio between 100:0 and 40:60, preferably 70:30 and 50:50. The protein content in the said infant formula is between 1.5 and 3.0 g /100 kcal.

The said infant formula may comprise a carbohydrate source. Any carbohydrate source conventionally found in infant formulae such as lactose, saccharose, maltodextrin, starch or mixtures thereof may be used, although the preferred source of carbohydrate is lactose. Preferably, the amount of lactose in the said infant formula according to the present invention is between 9.5 and 12 g/100 kcal.

The said infant formula may optionally contain other substances which may have a beneficial effect such as nucleotides, nucleosides, and the like. Nucleotides may be selected from cytidine monophosphate (CMP), uridine monophosphate (UMP), adenosine monophosphate (AMP), guanosine monophosphate (GMP) or any mixtures thereof.

The said infant formula is used for feeding an infant, which is very helpful for bone development.

In addition, described herewith is a method for providing nutrition to an infant which comprises feeding to an infant the said infant formula as described hereinabove.

The said infant formula may be in the form of a powder to be reconstituted or a concentrate to be diluted. The said infant formula may be packed in single dose units, each unit comprising sufficient nutritional composition to prepare a single serving upon reconstitution with water. Preferably, the units are in the form of capsules or a can.

A single serving generally comprises 8 to 35 g, preferably 10 to 30g, most preferably 11 to 28 g of powder to be reconstituted with 80 to 300 mL, preferably between 100mL and 250 mL of water. Alternatively, if the said infant formula is a concentrate, a single serving includes 1 to 50 mL of concentrate to be diluted with 50 to 250 mL of water.

The said infant formula may be prepared in any suitable manner. For example, an infant formula may be prepared by blending together a protein source, a carbohydrate source, and a fat source in appropriate proportions. If used, emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger. The liquid mixture may then be cooled to about 60°C to about 85°C for example by flash cooling. The liquid mixture may then be homogenized for example in two stages at about 7 MPa to about 40 MPa in the first stage and about 2 MPa to about 14 MPa in the second stage. The homogenized mixture may then be further cooled to add any heat sensitive components such as vitamins and minerals. The pH and solids content of the homogenized mixture are conveniently standardized at this point.

The homogenized mixture is transferred to a suitable drying apparatus such as a spray drier or freeze drier and converted to powder. The powder should have a moisture content of less than about 3% by weight. Alternatively, the homogenized mixture is concentrated.

If it is desired to add probiotic(s), they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the powdered infant formula by dry mixing.

The present invention provides an age-tailored nutrition system for an infant, which mimics human milk during the lactation.

According to the present invention, the said age-tailored nutrition system for an infant comprises:
a first infant formula being designed to meet the nutritional requirement of an infant from birth to two months and having a phosphorus source and a calcium source such that the calcium : phosphorus ratio is between 1.0:1 and 2.5:1, and
a second infant formula being designed to meet the nutritional requirement of an infant from above two to six months and having a phosphorus source and a calcium source such that the calcium : phosphorus ratio is between 1.0:1 and 2.5:1, and
optionally, a third infant formula being designed to meet the nutritional requirement of an infant from above six to twelve months and having a phosphorus source and a calcium source such that the calcium : phosphorus ratio is between 1.0:1 and 2.5:1,
wherein the calcium : phosphorus ratio in the second infant formula is higher than that in the first infant formula, and the calcium : phosphorus ratio in the optional third infant formula is higher than that in the second infant formula, and wherein at least one of the first, second and optional third infant formulae has a calcium : phosphorus ratio from more than 2.0:1 to 2.5:1.

In a particular embodiment, the said age-tailored nutrition system for an infant comprises
a first infant formula being designed to meet the nutritional requirement of an infant from birth to two months and having a phosphorus source and a calcium source such that the calcium : phosphorus ratio is from more than 2.0:1 to 2.5:1, and
a second infant formula being designed to meet the nutritional requirement of an infant from above two to six months and having a phosphorus source and a calcium source such that the calcium : phosphorus ratio is from more than 2.0:1 to 2.5:1, and
optionally, a third infant formula being designed to meet the nutritional requirement of an infant from above six to twelve months and having a phosphorus source and a calcium source such that the calcium : phosphorus ratio is from more than 2.0:1 to 2.5:1,
wherein the calcium : phosphorus ratio in the second infant formula is higher than that in the first infant formula, and the calcium : phosphorus ratio in the optional third infant formula is higher than that in the second infant formula.

In a preferable embodiment, the calcium : phosphorus ratio is from more than 2.0:1 to 2.3:1, preferably from 2.1:1 to 2.3:1 in the first infant formula. In another or a further preferable embodiment, the calcium : phosphorus ratio is between 2.2:1 and 2.5:1 in the second infant formula.

In another or a further preferable embodiment, the calcium : phosphorus ratio is between 2.4:1 and 2.5:1 in the third infant formula.

The calcium source and phosphorus source are those as described hereinabove for the said infant formula according to the present invention.

In General, each infant formula has a phosphorus content between 70 and 25 mg/100kcal and/or has a calcium content between 140 and 50 mg/100kcal. Preferably, in the first infant formula contained in the age-tailored nutrition system according to the present invention, the phosphorus content is between 70 and 42 mg/100kcal, preferably between 50 and 42 mg/100kcal and/or the calcium content is between 140 and 98 mg/100kcal, preferably between 105 and 98. In the second infant formula contained in the age-tailored nutrition system according to the present invention, the phosphorus content is between 42 and 38 mg/100kcal and/or the calcium content is between 98 and 95 mg/100kcal. In the third infant formula, if contained in the age-tailored nutrition system according to the present invention, the phosphorus content is lower than 38mg/100kcal and/or the calcium content is lower than 95 mg/100kcal.

Each infant formula contained in the age-tailored nutrition system according the present invention may comprise additional component sources to meet the nutritional requirement of an infant, such as sources of lipids, minerals other than calcium and phosphorus, vitamins, lactoferrin, probiotics such as Bifidobacterium, Lactobacillus or any mixtures thereof, prebiotics, proteins, carbohydrates, or any mixtures thereof. The additional components may be derived from the sources as described hereinabove for the said infant formula.

The lipids, minerals other than calcium and phosphorus, vitamins, lactoferrin, probiotics, prebiotics, proteins, carbohydrates may be used in conventional amounts known in the infant formula field, such as those described hereinabove for the said infant formula. In addition, the amounts may be varied in the different formulae of the age-tailored nutrition system according the present invention to meet the different nutritional requirements of infant development with age increasing.

In an embodiment, the content of at least one of the minerals selected from the group consisting of calcium, iodine, phosphorus, potassium, sodium, copper and zinc in the second infant formula is lower than in the first infant formula, and the content of the at least one of the minerals in the optional third infant formula is lower than in the second infant formula. More particularly, the contents of at least two, preferably at least three, more preferably at least four, particularly preferably at least five of said minerals in the second infant formula are lower than in the first infant formula, and the contents of said at least two, preferably at least three, more preferably at least four, particularly preferably at least five of said minerals in the optional third infant formula are lower than in the second infant formula.

In a preferable embodiment, said at least two minerals are iodine and phosphorus. In another preferable embodiment, said at least two minerals are iodine and potassium. In another preferable embodiment, said at least two minerals are iodine and sodium. In another preferable embodiment, said at least two minerals are iodine and copper. In another preferable embodiment, said at least two minerals are iodine and zinc. In another preferable embodiment, said at least two minerals are iodine and calcium.

In a preferable embodiment, said at least two minerals are phosphorus and potassium. In another preferable embodiment, said at least two minerals are phosphorus and sodium. In another preferable embodiment, said at least two minerals are phosphorus and copper. In another preferable embodiment, said at least two minerals are phosphorus and zinc. In another preferable embodiment, said at least two minerals are phosphorus and calcium.

In a preferable embodiment, said at least two minerals are potassium and sodium. In another preferable embodiment, said at least two minerals are potassium and copper. In another preferable embodiment, said at least two minerals are potassium and zinc. In another preferable embodiment, said at least two minerals are potassium and calcium.

In a preferable embodiment, said at least two minerals are sodium and copper. In another preferable embodiment, said at least two minerals are sodium and zinc. In another preferable embodiment, said at least two minerals are sodium and calcium.

In a preferable embodiment, said at least two minerals are copper and zinc. In another preferable embodiment, said at least two minerals are copper and calcium. In another preferable embodiment, said at least two minerals are zinc and calcium.

In a preferable embodiment, said at least three minerals are iodine, phosphorus and potassium. In another preferable embodiment, said at least three minerals are iodine, phosphorus and sodium. In another preferable embodiment, said at least three minerals are iodine, phosphorus and copper. In another preferable embodiment, said at least three minerals are iodine, phosphorus and zinc. In another preferable embodiment, said at least three minerals are iodine, phosphorus and calcium.

In a preferable embodiment, said at least three minerals are iodine, potassium and sodium. In another preferable embodiment, said at least three minerals are iodine, potassium and copper. In another preferable embodiment, said at least three minerals are iodine, potassium and zinc. In another preferable embodiment, said at least three minerals are iodine, potassium and calcium.

In a preferable embodiment, said at least three minerals are iodine, sodium and copper. In another preferable embodiment, said at least three minerals are iodine, sodium and zinc. In another preferable embodiment, said at least three minerals are iodine, sodium and calcium.

In a preferable embodiment, said at least three minerals are iodine, copper and zinc. In another preferable embodiment, said at least three minerals are iodine, copper and calcium. In another preferable embodiment, said at least three minerals are iodine, zinc and calcium.

In a preferable embodiment, said at least three minerals are phosphorus, potassium and sodium. In another preferable embodiment, said at least three minerals are phosphorus, potassium and copper. In another preferable embodiment, said at least three minerals are phosphorus, potassium and zinc. In another preferable embodiment, said at least three minerals are phosphorus, potassium and calcium.

In a preferable embodiment, said at least three minerals are phosphorus, sodium and copper. In another preferable embodiment, said at least three minerals are phosphorus, sodium and zinc. In another preferable embodiment, said at least three minerals are phosphorus, sodium and calcium.

In a preferable embodiment, said at least three minerals are phosphorus, copper and zinc. In another preferable embodiment, said at least three minerals are phosphorus, copper and calcium. In another preferable embodiment, said at least three minerals are phosphorus, zinc and calcium.

In a preferable embodiment, said at least three minerals are potassium, sodium and copper. In another preferable embodiment, said at least three minerals are potassium, sodium and zinc. In another preferable embodiment, said at least three minerals are potassium, sodium and calcium.

In a preferable embodiment, said at least three minerals are potassium, copper and zinc. In another preferable embodiment, said at least three minerals are potassium, copper and calcium.

In a preferable embodiment, said at least three minerals are sodium, copper and zinc. In another preferable embodiment, said at least three minerals are sodium, copper and calcium. In another preferable embodiment, said at least three minerals are sodium, zinc and calcium.

In a preferable embodiment, said at least three minerals are copper, zinc and calcium.

In a particularly preferable embodiment, the contents of iodine, phosphorus, potassium, sodium, copper and zinc in the second infant formula are lower than in the first infant formula, and the contents of said minerals in the optional third infant formula are lower than in the second infant formula.

In a very particularly preferable embodiment, the contents of calcium, iodine, phosphorus, potassium, sodium, copper and zinc in the second infant formula are lower than in the first infant formula, and the contents of said minerals in the optional third infant formula are lower than in the second infant formula.

In any of above embodiments, the content of iodine in the first infant formula is from 50.0 µg/100kcal to 16.5 µg/100kcal, preferably from 26.0 µg/100kcal to 16.5 µg/100kcal, the content of iodine in the second infant formula is from 16.5 µg/100kcal to 14.0 µg/100kcal, and the content of iodine in the optional third infant formula is lower than 14.0 µg/100kcal.

In any of above embodiments, the content of potassium in the first infant formula is from 170 mg/100kcal to 85 mg/100kcal, preferably from 115 mg/100kcal to 85 mg/100kcal, the content of potassium in the second infant formula is from 85 mg/100kcal to 80 mg/100kcal, and the content of potassium in the optional third infant formula is lower than 80 mg/100kcal.

In any of above embodiments, the content of sodium in the first infant formula is from 58 mg/100kcal to 25 mg/100kcal, preferably from 50 mg/100kcal to 25 mg/100kcal, the content of sodium in the second infant formula is from 25 mg/100kcal to 22 mg/100kcal, and the content of sodium in the optional third infant formula is lower than 22 mg/100kcal.

In any of above embodiments, the content of copper in the first infant formula is from 120 µg/100kcal to 62 µg/100kcal, preferably from 110 µg/100kcal to 62 µg/100kcal, the content of copper in the second infant formula is from 62 µg/100kcal to 55 µg/100kcal, and the content of copper in the optional third infant formula is lower than 55 µg/100kcal.

In any of above embodiments, the content of zinc in the first infant formula is from 1.5 mg/100kcal to 0.7 mg/100kcal, the content of zinc in the second infant formula is from 0.7 mg/100kcal to 0.6 mg/100kcal, and the content of zinc in the optional third infant formula is lower than 0.6 mg/100kcal.

In another preferable embodiment, the first infant formula contained in the age-tailored nutrition system according the present invention comprises whey and optional casein and has a whey:casein ratio between 100:0 and 60:40, and a protein content between 2.0 and 3.0 g /100 kcal, and the second infant formulae contained in the age-tailored nutrition system according the present invention comprises whey and casein and has a whey: casein ratio between 70:30 and 50:50 and a protein content between 1.7 and 2.1 g /100 kcal with the proviso that either the protein content or the whey:casein ratio of the second infant formula or both is/are lower than for the first formula. Each infant formula contained in the age-tailored nutrition system according the present invention may be prepared by the same process as described hereinabove for the said infant formula according to the present invention. The age-tailored nutrition system according to the invention is used for feeding an infant from birth to six or twelve months. Thus, the present invention also relates to a method for providing nutrition to an infant, which comprises feeding to an infant the said age-tailored nutrition system as described herein at the corresponding ages.

Herewith described is a method of providing nutrition to an infant in the first six months of life, comprising
feeding to the infant for at least part of the first two months of life a first infant formula, and
feeding to the infant for at least part of the following four months of life a second infant formula,
wherein the first infant formula and the second infant formula are as defined above.

Also described is a method of providing nutrition to an infant in the first twelve months of life, comprising
feeding to the infant for at least part of the first two months of life a first infant formula,
feeding to the infant for at least part of the following four months of life a second infant formula, and
feeding to the infant for at least part of the remainder of the first twelve months of life a third infant formula,
wherein the first infant formula, the second infant formula and the third infant formula are as defined above.

In an embodiment of the invention, the formulae of the age-tailored nutrition system according to the invention are packed in single dose units, each unit comprising sufficient nutritional composition to prepare a single serving upon reconstitution with water. Preferably, the units are in the form of capsules or a can.

A single serving generally comprises 8 to 35 g, preferably 10 to 30g, most preferably 11 to 28 g of powder to be reconstituted with 80 to 300 mL, preferably between 100mL and 250 mL of water. Alternatively, in case of concentrates, a single serving includes 1 to 50 mL of concentrate to be diluted with 50 to 250 mL of water.

The capsules may be disposable capsules equipped with opening means contained within the capsule to permit draining of the reconstituted formula directly from the capsule into a receiving vessel such as a bottle. Such a method of using capsules for dispensing an infant nutritional formula is described in WO2006/077259. The different nutritional formulae of the age-tailored nutrition system according to the invention may be packed into individual capsules and presented to the consumer in multipacks containing a sufficient number of capsules to meet the requirements of an infant for one week for example. Suitable capsule constructions are disclosed in WO2003/059778.

The age-tailored nutrition system according to the invention may be used for improving bone development from birth.

Herewith described is the use of the age-tailored nutrition system as described above for preparation of a kit for improving bone development of an infant from birth.

The present invention is further illustrated hereinafter by means of the following non-limiting examples.

### Examples

### Example 1

An array of age-tailored infant formulae is given in the table below. For each formula, 13.08g powder was added into 90 mL water to provide 100 mL reconstituted milk.

| | Age range | 0 to 2 months | 2 to 6 months | 6 to 12 months |
|---|---|---|---|---|
| Basics | Reconstitution RTD Volume (ml) | 100 to 200 | 100 to 200 | 230 |
| | | | | |
| | Energy density (kcal/100 ml) | 63-67 | 63-67 | 63 |
| Protein | Content (g/100kcal) | 1.8 - 2.25 | 1.8 - 2.25 | 1.8 |
| | Content (g/l) | 11.3 - 15.1 | 11.3 - 15.1 | 11.3 |
| | Whey:Casein | 70:30 | 70:30 | 50:50 |
| | Functional proteins | | | |
| Carbohydrates | Type | Lactose | Lactose | Lactose |
| | Content (g/100kcal) | 9.7 to 11.6 | 9.7 to 11.6 | 10.6 |
| | Content (g/l) | 65.0 to 73.5 | 65.0 to 73.5 | 66.8 |
| Lipids | Type | Milk & Veg. | Milk & Veg. | Milk & Veg. |
| | Content (g/100kcal) | 5.1 to 5.8 | 5.1 to 5.8 | 5.6 |
| | content (as % of total energy) | 45.9 to 52.2 | 45.9 to 52.2 | 45.8 |
| | Content (g/l) | 32.1 to 38.9 | 32.1 to 38.9 | 35.3 |
| | LC-PUFA | DHA + ARA | DHA + ARA | DHA + ARA |
| Soluble Fibers | Content (g/100kcal) | | | |
| Probiotics | Type | *B.lactis* | *B.lactis Or Bifidobacter ium longum* ATCC BAA-999 | |
| | Content | 2x 10⁷cfu/g | 2x 10⁷cfu/g or 10⁹cfu/g | |
| Nucleotides | CMP (mg/100 kcal) | 1.1 | 1.1 | - |
| | UMP | 0.7 | 0.7 | - |
| | AMP | 0.7 | 0.7 | - |
| | GMP | 0.2 | 0.2 | - |
| | NucleoPremix | | | - |
| Minerals (/100kcal) | Na (mg) | 40 | 24 | 21 |
| | K (mg) | 105 | 81 | 70 |
| | *Na*/*K (molar ratio)* | *0.65* | *0*.*5* | *0*.*5* |
| | *(Na+K)*/*Cl molar ratio* | *1*.*71 to 1.81* | *1*.*71 to 1.81* | *1*.*71* |
| | Cl (mg) | 87 to 92 | 61 to 65 | 56 |
| | Ca (mg) | 100 | 97 | 90 |
| | P (mg) | 47 | 42 | 37 |
| | Mg (mg) | 7 | 7 | 7 |
| | Mn (µg) | 5 | 5 | 5 |
| | Ca/P | 2.13 | 2.31 | 2.43 |
| | Fe (mg) | 0.7 | 0.7 | 1 |
| | I (µg) | 25 | 15 | 13 |
| | Cu (µg) | 100 | 60 | 53 |
| | Zn (mg) | 1.2 | 0.65 | 0.55 |
| | Se (µg) | 3 to 4 | 3 to 4 | 3 |
| | F (µg) | | | - |
| Vitamins (/100kcal) | Vit. A (mg RE) | 0.09 to 0.1125 | 0.09 to 0.1125 | 0.09 |
| | Beta carotene (µg) | | | |
| | Vit. D (mg) | 0.0015 | 0.0015 | 0.0015 |
| | Vit. E (mg) | 1.3 | 1.3 | 1.3 |
| | Vit. K1 (µg) | 8 | 8 | 8 |
| | Vit. C (mg) | 15 | 15 | 15 |
| | Vit. B1 (mg) | 0.07 to 0.1 | 0.07 to 0.1 | 0.1 |
| | Vit. B2 (mg) | 0.1 | 0.1 | 0.1 |
| | Niacin (mg) | 0.5 | 0.5 | 0.5 |
| | Vit. B6 (mg) | 0.05 | 0.05 | 0.05 |
| | Folic acid (µg) | 15 to 16 | 15 to 16 | 15 |
| | Pantothenic Acid (mg) | 0.7 to 0.8 | 0.7 to 0.8 | 0.8 |
| | Vit. B12 (µg) | 0.2 | 0.2 | 0.2 |
| | Biotin (µg) | 2 | 2 | 2 |
| | Choline (mg) | 20 | 20 | 20 |
| | Inositol (mg) | 25 | 25 | 20 |
| | Taurine (mg) | 8 | 8 | 6 |
| | Carnitine (mg) | 1.5 | 1.5 | - |

### Example 2

An array of age-tailored infant formulae is given in the table below:

| | 0 to 2 months | 2 to 6 months | 6 to 12 months |
|---|---|---|---|
| Nutrient | per 100kcal | per 100kcal | per 100kcal |
| Energy (kcal) | 100 | 100 | 100 |
| Protein (g) | 1.83 | 1.83 | 1.83 |
| Fat (g) | 5.3 | 5.3 | 5.3 |
| Linoleic acid (g) | 0.79 | 0.79 | 0.79 |
| α-Linolenic acid (mg) | 101 | 101 | 101 |
| Lactose (g) | 11.2 | 11.2 | 11.2 |
| Minerals (g) | 0.37 | 0.37 | 0.37 |
| Na (mg) | 40 | 23 | 21 |
| K (mg) | 100 | 80 | 75 |
| Cl (mg) | 64 | 64 | 64 |
| Ca (mg) | 100 | 96 | 92 |
| P (mg) | 46 | 41 | 37 |
| Ca/P ratio | 2.17 | 2.34 | 2.48 |
| Mg (mg) | 7 | 7 | 7 |
| Mn (µg) | 8 | 8 | 8 |
| Se (µg) | 2 | 2 | 2 |
| Vitamin A (µg RE) | 105 | 105 | 105 |
| Vitamin D (µg) | 1.5 | 1.5 | 1.5 |
| Vitamin E (mg TE) | 0.8 | 0.8 | 0.8 |
| Vitamin K1 (µg) | 8 | 8 | 8 |
| Vitamin C (mg) | 10 | 10 | 10 |
| Vitamin B1 (mg) | 0.07 | 0.07 | 0.07 |
| Vitamin B2 (mg) | 0.15 | 0.15 | 0.15 |
| Niacin (mg) | 1 | 1 | 1 |
| Vitamin B6 (mg) | 0.075 | 0.075 | 0.075 |
| Folic acid (µg) | 9 | 9 | 9 |
| Pantothenic acid (mg) | 0.45 | 0.45 | 0.45 |
| Vitamin B12 (µg) | 0.3 | 0.3 | 0.3 |
| Biotin (µg) | 2.2 | 2.2 | 2.2 |
| Choline (mg) | 10 | 10 | 10 |
| Fe (mg) | 1.2 | 1.2 | 1.2 |
| I (µg) | 24 | 15 | 13 |
| Cu (µg) | 95 | 60 | 54 |
| Zn (mg) | 1.25 | 0.65 | 0.58 |
| 3'sialyllactose (mg) | 30 | 30 | 30 |
| 6'sialyllactose (mg) | 6 | 6 | 6 |
| LNnT (mg) | 30 | 30 | 30 |
| 2FL (g) | 0.3 | 0.3 | 0.3 |

## Claims

1. An age-tailored nutrition system for an infant, comprising:
a first infant formula being designed to meet the nutritional requirement of an infant from birth to two months and having a phosphorus source and a calcium source such that the calcium : phosphorus ratio is between 1.0:1 and 2.5:1, preferably from more than 2.0:1 to 2.5:1, more preferably from more than 2.0:1 to 2.3:1 and
a second infant formula being designed to meet the nutritional requirement of an infant from above two to six months and having a phosphorus source and a calcium source such that the calcium : phosphorus ratio is between 1.0:1 and 2.5:1, preferably from more than 2.0:1 to 2.5:1, more preferably between 2.2:1 and 2.5:1 and
optionally, a third infant formula being designed to meet the nutritional requirement of an infant from above six to twelve months and having a phosphorus source and a calcium source such that the calcium : phosphorus ratio is between 1.0:1 and 2.5:1, preferably from more than 2.0:1 to 2.5:1, more preferably between 2.4:1 and 2.5:1,
wherein the calcium : phosphorus ratio in the second infant formula is higher than that in the first infant formula, and the calcium : phosphorus ratio in the optional third infant formula is higher than that in the second infant formula, and wherein at least one of the first, second and optional third infant formulae has a calcium : phosphorus ratio from more than 2.0:1 to 2.5:1.

2. An age-tailored nutrition system according to claim 1, wherein the phosphorus content in the first infant formula is between 70 and 42 mg/100kcal, and/or the calcium content is between 140 and 98 mg/100kcal, the phosphorus content in the second infant formula is between 42 and 38 mg/100kcal and/or the calcium content is between 98 and 95 mg/100kcal, the phosphorus content is lower than 38 mg/100kcal and/or the calcium content is lower than 95 mg/100kcal in the optional third infant formula.

3. An age-tailored nutrition system according to claim 1 or 2, wherein each of the first, the second and the optional third infant formulae of the age-tailored nutrition system comprises at least one additional component selected from lipids, minerals other than calcium and phosphorus such as those selected from the group consisting of copper, magnesium, potassium, iron, selenium, sodium, zinc, manganese, chloride and iodine, vitamins, lactoferrin, probiotics such as *Bifidobacterium, Lactobacillus* or any mixtures thereof, prebiotics, proteins such as whey, casein or mixture thereof, carbohydrates, or any mixtures thereof.

4. An age-tailored nutrition system according to claim 3, wherein the lipid is long-chain polyunsaturated fatty acids, preferably selected from docosahexaenoic acid (DHA), arachidonic acid (ARA), eicosapentaenoic acid (EPA) and dihomo-gamma-linolenic acid (DGLA), medium-chain triglycerides, milk fat globule membranes (MFGM), or any mixtures thereof.

5. An age-tailored nutrition system according to claim 3 or 4, wherein the content of at least one, preferably at least two, more preferably at least three, even more preferably at least four, particularly preferably at least five minerals selected from calcium, iodine, phosphorus, potassium, sodium, copper and zinc in the second infant formula is lower than that in the first infant formula, and the content of said at least one, preferably at least two, more preferably at least three, even more preferably at least four, particularly preferably at least five minerals in the optional third infant formula is lower than that in the second infant formula.

6. An age-tailored nutrition system according to any of claims 3 to 5, wherein each of the first, the second and the optional third infant formulae of the age-tailored nutrition system comprises whey and optional casein, the whey: casein ratio being chosen in the range from 100:0 to 40:60, preferably in the range from 70:30 to 50:50.

7. An age-tailored nutrition system according to claim 6, wherein the ratio of whey and casein in the first infant formula is between 100:0 and 60:40 and the protein content is between 2.0 and 3.0 g /100 kcal, and the ratio of whey and casein in the second infant formula is between 70:30 and 50:50 and the protein content is between 1.7 and 2.1 g /100 kcal, with the proviso that either the protein content or the whey : casein ratio of the second formula or both is/are lower than for the first formula.

8. An age-tailored nutrition system according to any of claims 1 to 7, wherein each of the first, the second and the optional third infant formulae of the age-tailored nutrition system is in the form of a powder to be reconstituted or a concentrate to be diluted, preferably being packed in single dose units, each unit comprising sufficient nutritional composition to prepare a single serving upon reconstitution with water, more preferably the single dose units being in a form of a capsule or a can.

## Patentansprüche

1. Altersangepasstes Ernährungssystem für einen Säugling, umfassend:
eine erste Säuglingsformel, die zur Erfüllung des Nährstoffbedarfs eines Säuglings von der Geburt bis zwei Monaten ausgelegt ist und eine Phosphorquelle und eine Calciumquelle derart aufweist, dass das Calcium: Phosphor-Verhältnis zwischen 1,0:1 und 2,5:1, vorzugsweise von mehr als 2,0:1 bis 2,5:1, mehr bevorzugt von mehr als 2,0:1 bis 2,3:1, beträgt, und
eine zweite Säuglingsformel, die zur Erfüllung des Nährstoffbedarfs eines Säuglings von über zwei bis sechs Monaten ausgelegt ist und eine Phosphorquelle und eine Calciumquelle derart aufweist, dass das Calcium: Phosphor-Verhältnis zwischen 1,0:1 und 2,5:1, vorzugsweise von mehr als 2,0:1 bis 2,5:1, mehr bevorzugt zwischen 2,2:1 und 2,5:1, beträgt, und
wahlweise eine dritte Säuglingsformel, die zur Erfüllung des Nährstoffbedarfs eines Säuglings von über sechs bis zwölf Monaten ausgelegt ist und eine Phosphorquelle und eine Calciumquelle derart aufweist, dass das Calcium: Phosphor-Verhältnis zwischen 1,0:1 und 2,5:1, vorzugsweise von mehr als 2,0:1 bis 2,5:1, mehr bevorzugt zwischen 2,4:1 und 2,5:1, beträgt,
wobei das Calcium: Phosphor-Verhältnis in der zweiten Säuglingsformel höher ist als dasjenige in der ersten Säuglingsformel und das Calcium: Phosphor-Verhältnis in der fakultativen dritten Säuglingsformel höher ist als dasjenige in der zweiten Säuglingsformel, und wobei mindestens eine der ersten, der zweiten und der fakultativen dritten Säuglingsformel ein Calcium:Phosphor-Verhältnis von mehr als 2,0:1 bis 2,5:1 aufweist.

2. Altersangepasstes Ernährungssystem nach Anspruch 1, wobei der Phosphorgehalt in der ersten Säuglingsformel zwischen 70 und 42 mg/100 kcal beträgt und/oder der Calciumgehalt zwischen 140 und 98 mg/100 kcal beträgt, der Phosphorgehalt in der zweiten Säuglingsformel zwischen 42 und 38 mg/100 kcal beträgt und/oder der Calciumgehalt zwischen 98 und 95 mg/100 kcal beträgt, der Phosphorgehalt in der fakultativen dritten Säuglingsformel geringer ist als 38 mg/100 kcal und/oder der Calciumgehalt geringer ist als 95 mg/100 kcal.

3. Altersangepasstes Ernährungssystem nach Anspruch 1 oder 2, wobei jede der ersten, der zweiten und der fakultativen dritten Säuglingsformel des altersangepassten Ernährungssystems mindestens einen zusätzlichen Bestandteil umfasst, ausgewählt aus Lipiden, Mineralien mit Ausnahme von Calcium und Phosphor, wie diejenigen, die ausgewählt sind aus der Gruppe bestehend aus Kupfer, Magnesium, Kalium, Eisen, Selen, Natrium, Zink, Mangan, Chlorid und Jod, Vitaminen, Lactoferrin, Probiotika wie *Bifidobacterium, Lactobacillus* oder beliebigen Mischungen davon, Präbiotika, Proteinen wie Molke, Casein oder einer Mischung davon, Kohlenhydraten oder beliebigen Mischungen davon.

4. Altersangepasstes Ernährungssystem nach Anspruch 3, wobei es sich bei dem Lipid um langkettige mehrfach ungesättigte Fettsäuren, vorzugsweise ausgewählt aus Docosahexaensäure (DHA), Arachidonsäure (ARA), Eicosapentaensäure (EPA) und Dihomo-gamma-Linolensäure (DGLA), mittelkettige Triglyceride, Milchfettkügelchenmembranen (MFGM) oder beliebige Mischungen davon handelt.

5. Altersangepasstes Ernährungssystem nach Anspruch 3 oder 4, wobei der Gehalt an mindestens einem, vorzugsweise mindestens zwei, mehr bevorzugt mindestens drei, noch mehr bevorzugt mindestens vier, besonders bevorzugt mindestens fünf Mineralien, ausgewählt aus Calcium, Jod, Phosphor, Kalium, Natrium, Kupfer und Zink, in der zweiten Säuglingsformel geringer ist als derjenige in der ersten Säuglingsformel und der Gehalt an dem mindestens einen, vorzugsweise den mindestens zwei, mehr bevorzugt mindestens drei, noch mehr bevorzugt mindestens vier, besonders bevorzugt mindestens fünf Mineralien in der fakultativen dritten Säuglingsformel geringer ist als derjenige in der zweiten Säuglingsformel.

6. Altersangepasstes Ernährungssystem nach einem der Ansprüche 3 bis 5, wobei jede der ersten, der zweiten und der fakultativen dritten Säuglingsformel des altersangepassten Ernährungssystems Molke und wahlweise Casein umfasst, wobei das Molke:Casein-Verhältnis im Bereich von 100:0 bis 40:60, vorzugsweise im Bereich von 70:30 bis 50:50, gewählt ist.

7. Altersangepasstes Ernährungssystem nach Anspruch 6, wobei das Verhältnis von Molke und Casein in der ersten Säuglingsformel zwischen 100:0 und 60:40 beträgt und der Proteingehalt zwischen 2,0 und 3,0 g/100 kcal beträgt und das Verhältnis von Molke und Casein in der zweiten Säuglingsformel zwischen 70:30 und 50:50 beträgt und der Proteingehalt zwischen 1,7 und 2,1 g/100 kcal beträgt, mit der Maßgabe, dass entweder der Proteingehalt oder das Molke:Casein-Verhältnis der zweiten Formel oder beide niedriger ist bzw. sind als für die erste Formel.

8. Altersangepasstes Ernährungssystem nach einem der Ansprüche 1 bis 7, wobei jede der ersten, der zweiten und der fakultativen dritten Säuglingsformel des altersangepassten Ernährungssystems in Form eines zu rekonstituierenden Pulvers oder eines zu verdünnenden Konzentrats vorliegt, das vorzugsweise in Einzeldosiseinheiten verpackt ist, wobei jede Einheit eine ausreichende Nährstoffzusammensetzung zur Zubereitung einer einzelnen Portion nach Rekonstitution mit Wasser umfasst, wobei mehr bevorzugt die Einzeldosiseinheiten in Form einer Kapsel oder einer Dose vorliegen.

## Revendications

1. Système de nutrition adapté à l'âge pour un nourrisson, comprenant :
une première préparation pour nourrissons étant conçue pour répondre à l'exigence nutritionnelle d'un nourrisson de la naissance à deux mois et ayant une source de phosphore et une source de calcium de sorte que le rapport calcium:phosphore soit compris entre 1,0:1 et 2,5:1, de préférence de plus de 2,0:1 à 2,5:1, plus préférablement de plus de 2,0:1 à 2,3:1 et
une deuxième préparation pour nourrissons étant conçue pour répondre à l'exigence nutritionnelle d'un nourrisson de plus de deux à six mois et ayant une source de phosphore et une source de calcium de sorte que le rapport calcium:phosphore soit compris entre 1,0:1 et 2,5:1, de préférence de plus de 2,0:1 à 2,5:1, plus préférablement entre 2,2:1 et 2,5:1 et
éventuellement, une troisième préparation pour nourrissons étant conçue pour répondre à l'exigence nutritionnelle d'un nourrisson de plus de six à douze mois et ayant une source de phosphore et une source de calcium de sorte que le rapport calcium:phosphore soit compris entre 1,0:1 et 2,5:1, de préférence de plus de 2,0:1 à 2,5:1, plus préférablement entre 2,4:1 et 2,5:1,
dans lequel le rapport calcium:phosphore dans la deuxième préparation pour nourrissons est supérieur à celui dans la première préparation pour nourrissons et le rapport calcium:phosphore dans la troisième préparation éventuelle pour nourrisson est supérieur à celui dans la deuxième préparation pour nourrissons et dans lequel au moins l'une des première, deuxième et troisième préparations pour nourrissons a un rapport calcium:phosphore de plus de 2,0:1 à 2,5:1.

2. Système nutritionnel adapté à l'âge selon la revendication 1, dans lequel la teneur en phosphore dans la première préparation pour nourrissons est entre 70 et 42 mg/100 kcal et/ou la teneur en calcium est entre 140 et 98 mg/100 kcal, la teneur en phosphore dans la deuxième préparation pour nourrissons est entre 42 et 38 mg/100 kcal et/ou la teneur en calcium est entre 98 et 95 mg/100 kcal, la teneur en phosphore est inférieure à 38 mg/100 kcal et/ou la teneur en calcium est inférieure à 95 mg/100 kcal dans la troisième préparation éventuelle pour nourrissons.

3. Système de nutrition adapté à l'âge selon la revendication 1 ou 2, dans lequel chacune des première, deuxième et troisième éventuelle préparations pour nourrissons du système de nutrition adapté à l'âge comprend au moins un composant supplémentaire choisi parmi les lipides, les minéraux autres que le calcium et le phosphore tels que ceux choisis dans le groupe constitué de cuivre, magnésium, potassium, fer, sélénium, sodium, zinc, manganèse, chlorure et iode, vitamines, lactoferrine, probiotiques tels que *Bifidobacterium, Lactobacillus* ou n'importe lequel de leurs mélanges, prébiotiques, protéines telles que le lactosérum, la caséine ou leur mélange, glucides ou n'importe lequel de leurs mélanges.

4. Système de nutrition adapté à l'âge selon la revendication 3, dans lequel les lipides sont des acides gras polyinsaturés à longue chaîne, de préférence choisis parmi l'acide docosahexaénoïque (DHA), l'acide arachidonique (ARA), l'acide éicosapentaénoïque (EPA) et l'acide dihomo gamma linolénique (DGLA), des triglycérides à chaîne moyenne, les membranes de globules de matière grasse du lait (MFGM) ou n'importe lequel de leurs mélanges.

5. Système de nutrition adapté à l'âge selon la revendication 3 ou 4, dans lequel la teneur en au moins un, de préférence au moins deux, plus préférablement au moins trois, encore plus préférablement au moins quatre, particulièrement préférablement au moins cinq minéraux choisis parmi le calcium, l'iode, le phosphore, le potassium, le sodium, le cuivre et le zinc dans la deuxième préparation pour nourrissons est inférieure à celle de la première préparation pour nourrissons et la teneur en lesdits au moins un, de préférence au moins deux, plus préférablement au moins trois, encore plus préférablement au moins quatre, particulièrement préférablement au moins cinq minéraux dans la troisième préparation éventuelle pour nourrissons est inférieure à celle de la deuxième préparation pour nourrissons.

6. Système de nutrition adapté à l'âge selon l'une quelconque des revendications 3 à 5, dans lequel chacune des première, deuxième et troisième éventuelle préparations pour nourrissons du système de nutrition adapté à l'âge comprend du lactosérum et éventuellement de la caséine, le rapport lactosérum:caséine étant choisi dans la plage allant de 100:0 à 40:60, de préférence dans la plage allant de 70:30 50:50.

7. Système de nutrition adapté à l'âge selon la revendication 6, dans lequel le rapport de lactosérum et de caséine dans la première préparation pour nourrissons est entre 100:0 et 60:40 et la teneur en protéine est entre 2,0 et 3,0 g/100 kcal et le rapport de lactosérum et de caséine dans la deuxième préparation pour nourrissons est entre 70:30 et 50:50 et la teneur en protéine est entre 1,7 et 2,1 g/100 kcal, à condition que l'un et/ou l'autre de la teneur en protéine ou du rapport lactosérum:caséine de la deuxième préparation soient inférieurs par rapport à la première préparation.

8. Système de nutrition adapté à l'âge selon l'une quelconque des revendications 1 à 7, dans lequel chacune des première, deuxième et éventuellement troisième préparations pour nourrissons du système de nutrition adapté à l'âge se présente sous la forme d'une poudre à reconstituer ou d'un concentré à diluer, étant de préférence conditionnée en unités de dose unique, chaque unité comprenant suffisamment de composition nutritionnelle pour préparer une seule portion lors de la reconstitution avec de l'eau, plus préférablement les unités de dose unique étant sous la forme d'une capsule ou d'une boîte.
